Europäisches Patentamt

European Patent Office

Office européen des brevets

(19)

(11) **EP 0 731 312 A1**

(12) **EUROPÄISCHE PATENTANMELDUNG**

(43) Veröffentlichungstag:
11.09.1996 Patentblatt 1996/37

(51) Int. Cl.⁶: **F16S 3/04**, E04B 1/61

(21) Anmeldenummer: 96101191.3

(22) Anmeldetag: 29.01.1996

(84) Benannte Vertragsstaaten:
AT BE CH DE DK ES FR GB GR IE IT LI LU MC NL PT SE

(30) Priorität: 06.03.1995 CH 632/95

(71) Anmelder: **Köchli-Bucheli, Alois**
6038 Gisikon (CH)

(72) Erfinder: **Köchli, Edgar**
CH-6253 Uffikon (CH)

(74) Vertreter: **Hotz, Klaus, Dipl.-El.-Ing./ETH
Patentanwalt
c/o OK pat AG
Hinterbergstrasse 36
Postfach 5254
6330 Cham (CH)**

(54) **Profilstab**

(57) Profilstab (60), der sich mit einem weiteren, gleichen aber um 180 grad um die Profillängsachse (61) gedrehten Profilstab zu einer von aussen zylindisch begrenzten Führungs- oder Verbindungsvorrichtung zusammenfügen lässt. Der Profilstab (60) weist eine Profilfläche (62) mit Teilflächen auf, die sich über einen Winkel **(alfa)** von mehr als 180 grad erstrecken und von aussen über 180 grad durch eine Maximalkreislinie (63) begrenzt sind. Die Profilfläche (62) besitzt mindestens drei Teilflächen, welche die Form von Kreisringsektoren (64, 65, 66) haben, sowie Freiflächen, welche kongruent zu den Teilflächen ausgebildet und zentralsymmetrisch zu diesen angeordnet sind. Umfangs-Begrenzungen (68) der Profilfläche (62) sind Anschläge für entsprechende Umfangs-Begrenzungen der Profilfläche des weiteren Profilstabes.

Fig.6

## Beschreibung

Die Erfindung betrifft einen Profilstab nach dem Oberbegriff des Patentanspruchs 1.

Profilstäbe mit verschiedensten Profilflächen werden nicht nur als selbständige Bauelemente verwendet sondern dienen häufig dazu, in Zusammenwirkung mit einem dazupassenden, zweiten Profilstab eine Führungs- oder Verbindungsvorrichtung zu bilden. Mit ihrer Hilfe lassen sich zwei Bauteile längenverschiebbar aneinander führen oder längs paralleler Kanten miteinander verbinden.

Um aus zusammenwirkenden Profilstäben Führungsvorrichtungen zu erhalten, müssen die Profilflächen so dimensioniert sein, dass die Profilstäbe eine Art Gleitsitz bilden; entsprechend müssen, um Verbindungsvorrichtungen zu erhalten, die Profilstäbe eine Art Pressitz bilden; dabei spielen allerdings neben den geometrischen Abmessungen auch die Elastizität und die Gleiteigenschaften der verwendeten Materialien eine Rolle, auf die hier nicht weiter eingegangen wird.

Solche Führungs- oder Verbindungsvorrichtungen werden in vielen Bereichen benötigt, beispielsweise bei der Herstellung von Möbeln, Verkehrsmitteln, optischen und medizinischen Apparaten, Maschinen und Waffen.

Neben den häufig verwendeten Profilstäben mit gradlinig begrenzten Profilen, wie beispielsweise T-Profilen, Doppel-T-Profilen, L-Profilen, U-Profilen und Schwalbenschwanzprofilen, bestehen auch Bedürfnisse nach Profilstäben, mit welchen man zylindrisch begrenzte Führungs- oder Verbindungsvorrichtungen erhält. Die einfachste solcher Führungs- oder Verbindungsvorrichtungen besteht aus einem rohrförmigen Profilstab, dessen geschlossene Profilfläche ein Kreisring ist, und der mit einem weiteren Profilstab zusammenwirkt, der entweder rohrförmig oder stangenförmig ist und der in den genannten rohrförmigen Profilstab passt.

Ungünstig dabei ist erstens, dass zur Vermeidung von gegengegenseitigen Verdrehungen der beiden Profilstäbe zusätzliche Massnahmen erforderlich sein können; und zweitens, dass ein am inneren Profilstab zu befestigender Bauteil nur im Inneren oder an den beiden Enden des Profilstabes aber nicht von aussen über einen beträchlichen Längsabschnitt oder über die ganze Länge des Profilstabes befestigt werden kann.

Um dies zu vermeiden, kann der äussere Profilstab mit einer länglichen Ausnehmung versehen werden, so dass seine nunmehr offene Profilfläche aus einem Kreisringsektor besteht; der innere Profilstab wird entsprechend mit einem länglichen, in die Ausnehmung des äusseren Profilstabes ragenden Ansatz versehen.

Aus solchen und ähnlichen Profilstäben lassen sich Führungs- und Verbindungsvorrichtung5n herst7llen, die funktional einwandfrei sind. Es besteht aber in jedem Fall der Nachteil, dass für jede Führungs- oder Verbindungsvorrichtung zwei Profilstäbe notwendig sind, deren Profilflächen komplementär und damit verschieden sind, was die Herstellung und Lagerhaltung in Bezug auf die Profilstäbe kompliziert.

Die Aufgabe der Erfindung wird somit darin gesehen, einen Profilstab der eingangs genannten Art zu schaffen, aus dem durch Zusammenfügen mit einem weiteren gleichen Profilstab eine Führungs- oder Verbindungseinrichtung herstellbar ist.

Diese Aufgabe wird erfindungsgemäss durch die Merkmale des kennzeichnenden Teils des Patentanspruchs 1 gelöst.

Bevorzugte Ausführungsbeispiele des erfindungsgemässen Profilstabes sind durch die Merkmale der kennzeichnenden Teile der abhängigen Patentansprüche definiert.

Der neue Profilstab besitzt eine Profilfläche aus Teilflächen und aus zu diesen kongruenten und zentralsymmetrisch angeordneten Freiflächen. Die Teilflächen erstrecken sich insgesamt über einen überstumpfen Winkel, d.h. über einen Winkel von mehr als 180 grad was eine Verschiebung von zwei gleichen, zusammengefügten Profilstäben quer zur Profillängsachse verhindert. Im weiteren bestehen die Teilfächen aus mindestens drei verschiedenen zusammenhängenden Kreisringsektoren, wobei die Bezeichnung 'Kreisringsektor' ausdrücklich auch Kreisringsektoren mit einem verschwindend kleinen bzw. gegen null gegenden Innenradius einschliessen soll. Diejenige der Kreislinien, die die Kreisringsektoren von aussen begrenzt und den grössten Aussenradius aufweist, wird als Maximalkreislinie bezeichnet. Sie liegt längs 180 grad an den Teilflächen der Profilfläche an, wobei sie die äussere Begrenzung mehrerer Kreisringsektoren bildet. Zu jeder der aus einem Kreisringsektor gebildeten Teilfläche enthält die Profilfläche eine zentralsymmetrisch angeordnete und zum entsprechenden Kreisringsektor kongruente Freifläche. Um aus diesem Profilstab in Zusammenwirkung mit einem zweiten, gleichen Profilstab eine Führungs- oder Verbimdungsvorrichtung zu erzeugen, wird der zweite Profilstab um 180 grad um die Profillängsachse gedreht. Nun können die beiden Profilstäbe so angeordnet werden, dass die Teilflächen jedes Profilstabes mit den Freiflächen des anderen Profilstabes fluchten, so dass es möglich ist,die beiden Profilstäbe zusammenzufügen, das heisst, sie in Richtung der Profillängsachse zusammenzustecken.

Man erhält dadurch eine Führungs- oder Verbindungsvorrichtung, die aussen durch einen Zylindermantel begrenzt ist. Obwohl die beiden Profilstäbe offene Profile aufweisen, besitzt die aus ihnen erzeugte Führungs- oder Verbindungsvorrichtung eine beträchtliche Biege- und Torsionssteifigkeit. Die Führungseigenschaften sind so, dass sie zuverlässig jede relative Linearverschiebung quer zur Profillängsachse und jede relative Drehung um die Profillängsachse der beiden Profilstäbe und der daran befestigten Bauteile verhindern. Relative Linearverschiebungen quer zur Profillängsachse werden dadurch verunmöglicht, dass sich die Teilflächen der Profilfläche über mehr als 180 grad erstrecken, und relative Drehungen um die Profillängsachse werden dadurch verhindet, dass radial gerichtete Umfangs-Begrenzungen der Kreisringsektoren des einen Profilstabes als Anschläge für entsprechende radial gerichtete Umfangs-Begrenzungen des anderen Profilstabes dienen. Für die Montage von weiteren konstruktiven, zu führenden oder zu verbindenden Bauteilen ist von Bedeutung, dass an jedem der Profilstäbe eine frei zugängliche Montagefläche vorhanden ist, die sich über nahezu 180 grad erstreckt.

Wie weiter oben erwähnt, wird die Profilfläche von aussen durch eine Maximalkreislinie begrenzt; über die innere Begrenzung der Profilfläche bzw. den Radius einer Minimalkreislinie, der diese innere Begrenzung bildet, wurde bisher nichts ausgesagt. Bei einem gegebenen Radius der Maximalkreislinie bestimmt dieser Radius der Minimalkreislinie, der, wie schon erwähnt, auch null sein kann, die mechanischen Eigenschaften sowie weitgehend die Anwendungsmöglichkeiten des Profilstabes.

Profilstäbe mit besonders hoher mechanischer Festigkeit erhält man, wenn der Radius der Minimalkreislinie über die gesamten 180 grad, über welche sich die Minimalkreislinie erstreckt, verschwindend klein oder null ist, das heisst wenn die Minimalkreislinie zu einem Punkt degeneriert. In diesem Fall nimmt die Profilfläche die Hälfte der durch die volle Maximalkreislinie begrenzten Kreisfläche ein. Beim Zusammenfügen des Profilstabes mit einem weiteren, gleichen Profilstab erhält man auf diese Weise ein kreisförmiges Vollprofil.

Oftmals ist eine solch massive Ausbildung des Profilstabes nicht notwendig, aber die Befestigung eines Bauteils am Profilstab bedingt, dass einer der aussen durch die Maximalkreislinie begrenzten Kreisringsektoren eine verhältnismässig grosse Wandstärke aufweist, damit kräftige Verbindungselemente verwendet oder Schweiss- oder Lötverbindungen ohne Wärmeverzug des Profilstabes hergestellt werden können. Zu diesem Zweck wird die Profilfläche so ausgebildet, dass mindestens einer der die Profilfläche bildenden, an der Maximalkreislinie anliegenden Kreisringsektoren innen durch eine Minimalkreislinie begrenzt ist, die sehr klein oder praktisch null ist, so dass der entsprechende Kreisringsektor zu einem Kreissektor degeneriert, während sich die anderen Kreisringsektoren nicht bis ins Zentrum erstrecken und somit echte Kreisringsektoren sind. Auf diese Weise erhält man beim Zusammenfügen des Profilstabes mit einem weiteren gleichen Profilstab eine Führungs- oder Verbindungsvorrichtung, in deren Innerem Hohlräume gebildet werden. Eine solche Führungs- oder Verbindungsvorrichtung ist nicht nur leichter, sondern sie ermöglicht auch, dass Leitungen irgendwelcher Art, Fluide oder Materialstränge durch diese Hohlräume geführt werden können.

Eine besonders geeignete Führungs- oder Verbindungsvorrichtung mit einem röhrenförmigen Hohlraum erhält man, wenn die Teilflächen der Profilfläche innen längs 180 grad durch eine Minimalkreislinie begrenzt sind.

Es lassen sich bei Bedarf auch Profilstäbe mit Teilflächen ihrer Profilflächen herstellen, die sowohl einen Kreisringsektor mit grosser Wandstärke wie auch einen inneren zylindrischen Hohlraum aufweisen. In solchen Fällen ist es allerdings vorteilhaft, einen Kreisringsektor mit sehr grosser Wandstärke nicht unmittelbar angrenzend an einen Kreisringsektor mit geringer Wandstärke anzuordnen, da man bei einer abrupten Aenderung der Wandstärke in unerwünschter Weise eine potentielle Sollbruchstelle schafft. Es ist daher vorzuziehen, einen gewissermassen stufenweisen Uebergang mit sich jeweils nur wenig verringernden Wandstärken vorzusehen.

Insbesondere wenn ein Profilstab nicht aus vollem Material herausgearbeitet sondern beispielsweise durch Biegung aus Plattenmaterial hergestellt wird, sollte die Profilfläche aus Kreisringsektoren bestehen, die alle die gleiche Radialabmessung bzw. Wandstärke aufweisen. Die Teilflächen einer solchen Profilfläche bilden eine Art unstetiger Spirale. Diese Spirale weist jeweils über annähernd 180 grad denselben Radius auf; dieser Radius verringert sich stets nach 180 grad, wobei die Verringerung so bemessen sein muss, dass der radiale Abstand benachbarter halber Kreisringsektoren gleich gross ist wie die radiale Abmessung bzw. Wandstärke der Kreisringsektoren im allgemeinen, und im speziellen wie die radiale Abmessung bzw. die Wandstärke desjenigen Kreisringsektors eines weiteren, gleichen Profilstabes, der zwischen die beiden benachbarten Kreisringsektoren zu liegen kommt, wenn aus zwei Profilstäben eine Führungs- oder Verbindungsvorrichtung gebildet wird.

Je nach der Herstellungsart und je nach dem verwendeten Werkstoff kann es sein, dass bei der praktischen Ausführung der erfindungsgemässen Profilstäbe kleine Abweichungen von den angegebenen präzisen geometrischen Formen und Grössen vorkommen, die allerdings für den Aufbau und die Wirkungsweise der Profilstäbe praktisch keine Bedeutung haben. Insbesondere können Umfangs-Begrenzungen zwischen zwei aneinandergrenzenden Kreisringsektoren nicht exakt radial verlaufen sondern leicht abgeschrägt sein, was in diesem Zusammmenhang bedeutet, dass sie in einer Richtung zwischen Radialrichtung und Umfangsrichtung verlaufen. Solche schräge Umfangs-Begrenzungen wirken wie die weiter oben beschriebenen radial verlaufenden Umfangs-Begrenzungen als Anschläge für entsprechende Umfangs-Begrenzungen eines weiteren, gleichen Profilstabes, mit welchem der erste Profilstab zusammenfügbar ist. Gelegentlich werden auch, um das Zusammenfügen des Profilstabes mit einem weiteren, gleichen Profilstab zu erleichtern, die Freiflächen zu Lasten der Teilflächen minimal vergrössert. Profilstäbe mit Profilflächen, die in dieser Art von der geometrischen Idealform abweichen, sollen als ausdrücklich im Bereich der Erfindung liegend gelten.

Wenn auch der neue Profilstab zur Verwendung in Führungs- oder Verbindungsvorrichtungen entwickelt wurde, so lässt er sich auch zu verschiedenen anderen Zwecken verwenden. Axial schmale Abschitte des Profilstabes können beispielsweise in bajonettverschlussähnlichen Einrichtungen oder als eine Art von dreidimensionalen Puzzles, insbesondere für Denktests, gebraucht werden.

Im folgenden wird die Erfindung anhand von mehreren Ausführungsbeispielen und mit Bezug auf die Zeichnung ausführlich beschrieben. Alle Ausführungsbeispiele sind axonometrisch dargestellt, und es zeigt:

**Fig. 1**      einen ersten Profilstab, der mit einem weiteren, gleichen Profilstab im Eingriff ist;

**Fig. 2**      einen zweiten Profilstab, der ebenfalls mit einem weiteren, gleichen Profilstab im Eingriff ist;

**Fig. 3**      einen dritten Profilstab, der ebenfalls mit einem weiteren, gleichen Profilstab im Eingriff ist;

**Fig. 4**      einen vierten Profilstab;

**Fig. 5**      einen fünften Profilstab; und

**Fig. 6**      einen sechsten Profilstab.

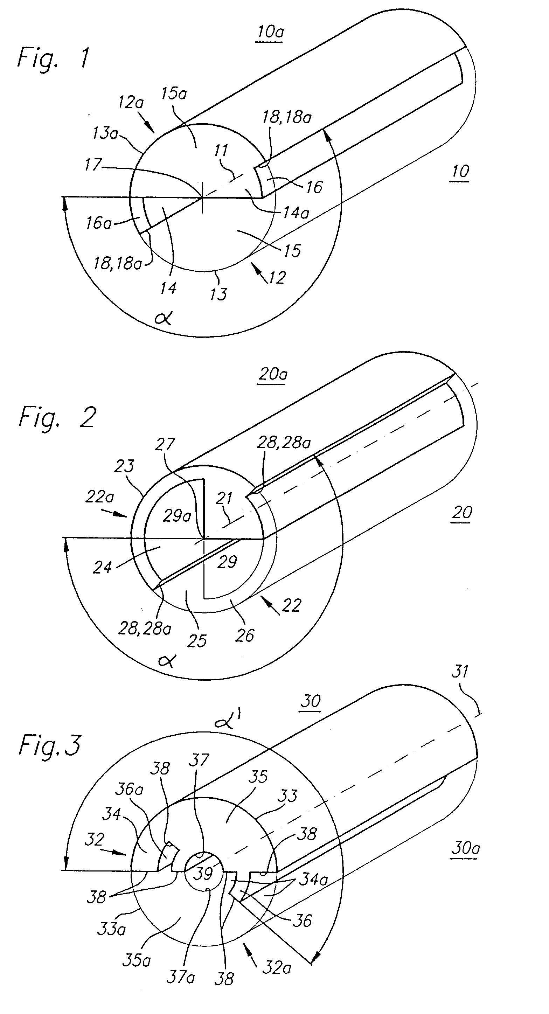

Der Profilstab **10** der **Fig. 1** weist eine Profillängsachse **11** und eine Profilfläche **12** mit Teilflächen auf, die sich insgesamt über einen überstumpfen Winkel **alfa** erstreckt, und deren den grössten Aussenradius aufweisende Teile von aussen über einen gestreckten Winkel von einer Maximalkreislinie **13** begrenzt werden. Infolge des gestreckten Winkels, längs welchem die MAximalkreislinie verläuft, erhält man beim Zusamenfügen des Profilstabes **10** mit einem weiteren gleichen, um 180 grad um die Profillängsachse **11** gedrehten Profilstab **10a** eine Führungs- oder Verbindungsvorrichtung, die aussen zylindrisch begrenzt ist. Dadurch, dass sich die Teilflächen der Profilfläche **12** insgesamt über mehr als 180 grad erstrecken, verhindert man jede relative Linearbewegung quer zur Profillängsachse zwischen den Profilstäben **10** und **10a**. Die Profilfläche **12** besitzt drei aneinandergrenzende Teilflächen, nämlich den Kreisringsektor **14** und die Kreissektoren **15, 16**, sowie zu jeder der Teiflächen kongruente, zentralsymmetrisch angeordnete Freiflächen. Diese Freiflächen werden beim Zusammenfügen des Profilstabes **10** mit dem Profilstab **10a** durch die Teilflächen **14a, 15a, 16a** der Profilfläche **13a** des Profilstabes **10a** eingenommen. Das gleiche gilt auch im umgekehrten Sinn, d.h. die Freiflächen der Profilfläche **10a** werden durch die Teilflächen der Profilfläche **10** eingenommen. Eine Minimalkreislinie **17**, welche die Profilfläche **12** von Innen begrenzt, ist in diesem Aufführungsbeispiel nicht vorhanden bzw. wird durch einep Punkt gebildet. Die Profilstäbe **10** und **10a** bilden somit zusammen ein volles Kreisprofil, dessen Durchmesser dem Durchmesser der Maximalkreislinie **13!**gleich ist. Radial verlaufende Umfangs-Begrenzungen **18** der Teilflächen der Profilfläche **12** bilden Anschläge für entsprechende radiale Umfangs-Begrenzungen **18a** des Profilstabes **10a**. Diese Anschläge verhindern eine relative Drehung der Profilstäbe **10** und **10a**.

Der Profilstab **20** gemäss **Fig. 2** weist eine Profillängsachse **21** und eine Profilfläche **22** mit Teilflächen auf, die insgesamt längs dem überstumpfen Winkel **alfa** verlaufen und deren den grössetn Radius aufweisende Teile über 180 grad durch einen Maximalkreis **23** begrenzt werden. Die Profilfläche **22** besitzt drei Teilflächen, nämlich den Kreisringsektor **24** und die Kreissektoren **25, 26**. Zum Profil **22** gehören ferner Freiflächen, die kongruent zu den Teilflächen und zentralsymmetrisch zu ihnen angeordnet sind. Eine Minimalkreislinie **27**, welche die Teilflächen der Profilfläche **22** von innen begrenzen würde, ist zu einem Punkt degeneriert. Radiale Anschläge werden durch radial verlaufende Umfangs-Begrenzungen **28** gebildet. Ebenso wie beim Profilstab **10** gem. **Fig. 1** jeder Teil einem gleichen Teil des Profilstabes **10a** entspricht, so entspricht auch jedem Teil des Profilstabes **20** ein Teil des Profilstabes **20a**. Alle Teile des Profilstabes **20a** werden mit den gleichen Bezugszeichen, jedoch ergänzt um 'a', bezeichnet wie die entsprechenden Teile des Profilstabes **20**. Das Zusammenfügen der Profilstäbe **20** und **20a** und ihr Zusammenwirken ist so, wie es weiter oben mit Bezug auf die Profilstäbe **10** und **10a** beschrieben wurde. Im Unterschied zu der Führungs- oder Verbindungsvorrichtung gem. **Fig. 1** erhält man aber zwei Hohlräume **29, 29a**, welche innerhalb der Kreisringsektoren **24** bzw. **24a** liegen und es erlauben, im Inneren der Führungs- oder Verbindungsvorrichtung Leitungen zu verlegen.

**Fig. 3** zeigt einen Profilstab **30** mit einer Profillängsachse **31** und einer Profilfläche **32** mit Teilflächen, die insgesamt über einen überstumpfen Winkel **alfa** reichen, und deren den grössten Radius aufweisende Teile über einen Winkel von 180 grad von einer Maximalkreislinie **33** begrenzt werden. Auch ein gleicher zweiter Profilstab **30a** ist dargestellt, dessen Teile stets die gleichen Bezugszeichen, jedoch ergänzt um 'a', tragen wie die entsprechenden Teile des Profilstabes **30**. Die Profilfläche **32** besitzt vier Teilflächen, sowie diesen zugeordnete Freiflächen, wie es mit Bezug auf die **Fig. 1** und **2** beschrieben wurde. Die Teilflächen umfassen zwei Kreisringsektoren **34**, die sich über einen gemeinsamen Winkelbereich erstrecken, ferner einen recht massiven Kreisringsektor **35** und einen weiteren Kreisringsektor **36**, der zum Zwischenraum zwischen den beiden Kreisringsektoren **34** kongruent und zentralsymmetrisch zu diesem Zwischenraum angeordnet ist. Eine Minimalkreislinie **37** begrenzt die Teilflächen der Profilfläche **32** von innen über 180 grad. Wie bei den **Fig. 1** und **2** beschrieben, werden durch radial verlaufende Umfangs-Begrenzungen **38** der Profilfläche **32** Anschläge für entsprechende radial verlaufende Umfangs-Begrenzungen **39a** der Profilfläche **32a** gebildet.Die **Fig. 3** zeigt deutlich, dass durch das Zusammenfügen des Profilstabes **30** mit dem gleichen, um 180 grad um die Profillängsachse **31** gedrehten Profilstab **30a** ein kreisringförmiges Hohlprofil mit einem Hohlraum **39** entsteht. Der massive Kreisringsektor **35** eignet sich, wie früher erwähnt, besonders zur Befestigung von weiteren, nicht dargestellten Bauteilen.

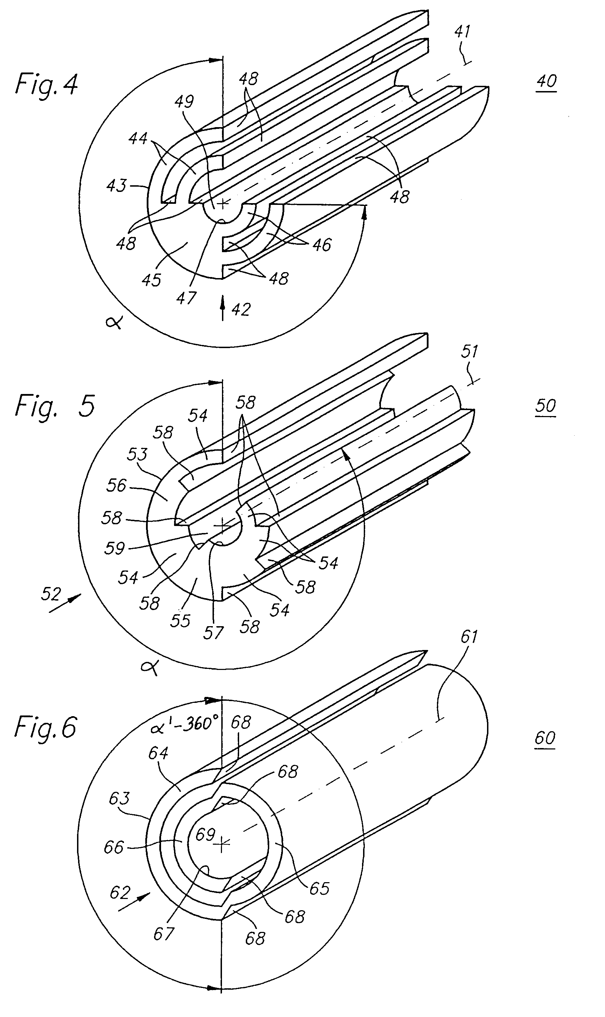

**Fig. 4** zeigt einen Profilstab **40** mit einer Profillängsachse **41** und einer Profilfläche **42**, der dem Profilstab **30** der **Fig. 3** sehr ähnlich ist. Teilflächen der Profilfläche **42** erstrecken sich auch hier über einem überstumpfen Winkel **alfa** und die Teile mit dem grössten Durchmesser werden längs 180 grad durch eine Maximalkreislinie **43** von aussen und eine Minimalkreislinie **47** von innen begrenzt. Die Profilfläche **42** besitzt zwei sich über einen gemeinsamen Winkelbereich erstreckende Kreisringsektoren **44**, einen massiven Kreisringsektor **45**, der dem gleichen Zweck dient wie der massive Kreisringsektor **35** des Profilstabes **30**, und nochmals zwei sich über einen weiteren gemeinsamen Winkelbereich erstreckende Kreisringsektoren **46**. Wie bereits mehrfach beschrieben, gehört auch bei der Profilfläche **42** zu jeder der Teilflächen eine kongruente und zentralsymmetrisch angeordnete Freifläche. Insbesondere entspricht der Freifläche zwischen den Kreisringsektoren **44** der kongruente und zentralsymmetrisch angeordnete innere Kreisringsektor **46**. Auch bei diesem Profilstab **40** werden durch Umfangs-Begrenzungen **48** aller Kreisringsektoren Anschläge **48** gebildet für entsprechende Teile eines weiteren, nicht dargestellten, gleichen Profilstabes, der mit dem Profilstab **40** zusammenfügbar ist. Wie beim Profilstab **30** würde bei einem solchen Zusammenfügen auch hier ein Hohlraum **40** entstehen, der ±ine Kreisfläche mit demselben Durchmesser wie die Minimalkrei • linie **47** bildet.

**Fig. 5** zeigt einen Profilstab **50** mit einer Profillängsachse **51** und einer Profilfläche **52** mit Teilflächen, die sich längs einem überstumfen Winkel **alfa** erstreckt und die längs einem Winkel von 180 grad durch eine Maximalkreislinie **53** begrenzt ist. Die Profilfläche **52** besitzt sieben Teilflächen, die alle durch Kreisringsektoren **54**, **55**, **56** gebildet werden, wobei mit **54** der schwächste, mit **55** der massivste und mit **56** die übrigen Kreisringsektoren bezeichnet sind. Der massivste Kreisringsektor **55** ist besonders zur Befestigung weiterer, nicht dargestellter Bauteile geeignet. Der inneren Begrenzung der Profilfläche **52** dient auch hier eine Minimalkreislinie **57**, und durch radial verlaufende Umfangs-Begrenzungen **58** werden entsprechende Anschläge gebildet, wie mit Bezug auf die **Fig. 1** bis **4** beschrieben. Wie bei den bereits beschriebenen Profilstäben gehört auch beim Profilstab **50** zu jeder Teilfläche der Profilfläche **52** eine kongruente und zentralsymmetrisch angeordnete Freifläche. In bebekannter Weise lässt sich der Profilstab **50** mit einem gleichen Profilstab zusammenfügen, wobei in der Mitte ein Hohlraum **59** entsteht, der durch einen Kreis mit dem Durchmesser der Minimalkreislinie **57** begrenzt ist. Zwischen dem radial kleinsten Kreis? ringsektor **54** und dem radial kräfigsten Kreisringsektor **55** sind zwei Kreisringsektoren **56** angeordnet, die, wie schon erwähnt, bezüglich ihrer radialen Abmessung zwischen den Kreisringsektoren **54** und **55** liegen. Damit verhindert man das Entstehen von potentiellen Sollbruchstellen zwischen Teilen mit sehr verschiedenen Dicken bzw. Wandstärken.

**Fig. 6** zeigt einen Profilstab **60 mit einer Profillängsachse 61** und einer Profilfläche **62**. Dieser Profilstab **60** eignet sich besonders, um aus Plattenmaterial hergestellt zu werden. Teilflächen der Profilfläche **62** erstrecken sich über einen überstumpfen Winkel, der hier praktisch 540 grad beträgt; in **Fig. 6** ist der Winkel **alfa'** = alfa - 360 grad eingezeichnet. Die äussere Begrenzung wird durch eine Maximalkreislinie **63** gebildet, die im wesentlichen längs 180 grad verläuft. Die Profilfläche **62** weist drei Teilflächen auf, die durch Kreisringsektoren **64**, **65**, **66** gebildet sind. Jeder der Kreisringsektoren **64**, **65**, **66** erstreckt sich nahezu über 180 grad. Wie bereits mehrfach beschrieben, gehören zu allen Teilflächen kongruente und zentralsymmetrisch angeordnete Freiflächen. Auch bei diesem Profilstab **60** sind Umfangs-Begrenzungen **68** vorhanden, welche als Anschläge wirken, um eine relative Drehung zwischen ihm und einem mit ihm zusammengefügten gleichen, nicht dargestellten Profilstab zu verhindern. Die Umfangs-Begrenzungen **68** verlaufen aber nicht radial sondern schräg, das heisst, sie nehmen eine Mittellage zwischen den jeweiligen Radial- und Umfangsrichtungen ein. Der Grund für diese Formgebung liegt vor allem darin, die Herstellung zu vereinfachen und scharfe Aussenkanten zu vermeiden. Die innerste Begrenzung der Profilfläche **62** bildet über 180 grad eine Minimalkreislinie **67**, welche in gleicher Weise wie bereits mehrfach beschrieben die halbe Begrenzung eines mittigen Hohlraumes **69** ist. Die Profilfläche **62** bildet also eine Art unstetiger Spirale, bei der sich die radialen Abmessungen jeweils nach etwa 180 grad sprunghaft ändern, und zwar um einen Wert, der der Radiala_messung bzw. der Wandstärke der Kreisringsektoren entspricht. Der Kreisringsektor **65** hat daher im wesentlichen die Form der Freifläche zwischen den Kreisringsektoren **64**, **66**. Die Kreisringsektoren **64**, **65**, **66** können als gebogene Schenkel gleicher Wandstärke der Profilfläche **62** betrachtet werden.

Es sei noch darauf hingewiesen, dass die Abmessungen der Kreisringsektoren nicht nur verschieden sind, sondern dass auch die Unterschiede zwischen diesen Abmessungen verschieden sein können; wesentlich ist nur, dass stets Teilflächen und entsprechende zentralsymmetrische Freiflächen kongruent sind.

Die sechs beschriebenen Profilstäbe bzw. deren Profilflächen stellen lediglich eine kleine Auswahl aus der unbegrenzten Zahl der erfindungsgemäss möglichen Profilflächen dar. In jedem Fall besteht die äusserste Begrenzung der Profilfläche aus einer Maximalkreislinie, die sich über 180 grad erstreckt, und die innerste Begrenzung aus einer Minimalkreislinie, die sich ebenfalls über 180 grad erstreckt. Da sich das gesamte Profil über mehr als 180 grad erstreckt, fallen die Maximalkreislinie und die Minimalkreislinie im allgemeinen nicht in einen gemeinsamen Winkelbereich, in Ausnahmefällen ist dies aber möglich. Die Tatsache, dass zu jeder Profilfläche einerseits materielle Teilflächen und anderseits zu diesen kongruent ausgebildete und zentralsymmetrisch angeordnete Freiflächen gehören, bedeutet, dass die materiellen Teilflächen stets die Häfte der Fläche einnehmen, die durch eine auf 360 grad verlängerte Maximalkreislinie und eine ebenfalls auf 360 grad verlängerte Minimalkreislinie begrenzt wird; flächenmässige Abweichungen von diesen Werten können sich, wie früher beschrieben, ergeben, wenn aus Gründen der Herstellung oder der Montage die Freiflächen zu Lasten der Teilflächen leicht vergrössert werden.

Wie schon erwähnt, lässt sich ein solcher Profil nicht nur in Kombination mit einem gleichen Profilstab als Führungs- und Verbindungsvorrichtung sondern auch in verschiedenen anderen technischen Anwendungen einsetzen.

**Patentansprüche**

1. Profilstab mit einer offenen Profilfläche, die mindestens eine Teilfläche in Form eines Kreisringsektors besitzt und von aussen über 180 grad durch eine Maximalkreislinie begrenzt ist, und die zu jeder ihrer Teilflächen eine kongruente und zentralsymmetrisch angeordnete Freifläche besitzt,
**dadurch gekennzeichnet,**
dass sich die Teilflächen der Profilfläche **(12; 22; 32; 42; 52; 62)** über einen überstumpfen Winkel **(alfa)** erstrecken, und mindestens zwei weitere Kreisringsektoren **(14,15,16; 24,25,26; 34,35,36; 44,45,46; 54,55; 64,65,66)** enthalten, derart, dass der Profilstab **(10; 20; 30; 40; 50; 60)** mit einem weiteren Profilstab **(10a; 20a; 30a)** mit kongruenter Profilfläche **(12a; 22a; 32a)**, der gegenüber dem erstgenannten Profilstab **(10; 20; 30; 40; 50; 60)** um 180 grad um die Profillängsachse **(11; 21; 31; 41; 51; 61)** gedreht ist, zu einer aussen durch eine Zylindermantelfläche mit dem Durchmesser des Maximalkreises **(13; 23; 33; 43; 53; 63)** begrenzten Führungsvorrichtung- oder Verbindungsvorrichtung zusammenfügbar ist.

2. Profilstab nach Patentanspruch **1**,
**dadurch gekennzeichnet,**
dass die Kreisringsektoren **(14,15,16)** einen Innenradius null aufweisen. **(Fig. 1)**.

3. Profilstab nach Patentanspruch **1**,
**dadurch gekennzeichnet,**
dass mindestens einer der Kreisringsekto_en **(24,25)** einen Innenradius null aufweist und dass mindestens einer der Kreisringsektoren **(26)** einen von null verschiedenen Innenradius aufweist, derart, dass die Führungs oder Verbindungseinrichtung zwei Hohlräume **(29, 29a)** aufweist. **(Fig. 2)**.

4. Profilstab nach Patentanspruch **1**,
**dadurch gekennzeichnet,**
dass die Profilfläche **(32; 42; 52; 62)** von innen über 180 grad durch eine Minimalkreislinie **(37; 47; 57; 67)** begrenzt wird, derart, dass die Führungs- oder Verbindungsvorrichtung einen zylindrischen Hohlraum **(39; 49; 59; 69)** mit dem Durchmesser des Minimalkreises **(37; 47; 57; 67)** aufweist. **(Fig. 3 - 6)**.

5. Profilstab nach Patentanspruch **1**,
**dadurch gekennzeichnet,**
dass mindestens einer der Kreisringsektoren **(15; 25; 35; 45; 55)**, die an der Maximalkreislinie **(13; 23; 33; 43; 53; 63)** anliegen, sich über einen grössren Radiusbereich erstreckt als die übrigen Kreisringsektoren. **(Fig. 1 - 5)**.

6. Profilstab nach Patentanspruch **1**,
**dadurch gekennzeichnet,**
dass er zwei Kreisringsektoren **(34; 44,46; 64,65)** aufweist, die sich über einen gemeinsamen Winkelbereich erstrecken. **(Fig. 3, 4 und 6)**.

7. Profilstab nach Patentanspruch **1**.
**dadurch gekennzeichnet,**
dass zwischen dem Kreisringsektor **(54)** mit der geringsten radialen Abmessung und dem Kreisringsektor **(55)** mit der grössten radialen Abmessung mindestens ein weiterer Kreisringsektor **(56)** mit einer mitteleren radialen Abmessung angeordnet ist. **(Fig. 5)**.

8. Profilstab nach Patentanspruch **1**,
**dadurch gekennzeichnet,**
dass die Kreisringsektoren **(64;65,66)** über annähernd 180 grad verlaufen, eine konstante Wandstärke aufweisen und fortlaufend in der Art einer unstetigen Spirale angeordnet sind. **(Fig. 6)**.

9. Profilstab nach Patentanspruch **1**,
**dadurch gekennzeichnet,**
dass die Kreisringsektoren **(14,15,16; 24,25,26; 34,35,36; 44,45,46; 54,55,56)** durch radial verlaufende Umfangs-Begrenzungen **(18; 28; 38; 48; 58)** begrenzt sind, welche Anschläge für entprechende Umfangs-Begrenzungen eines weiteren, gleichen Profilstabes bilden, der mit dem gennanten Profilstab **(10; 20; 30; 40; 50)** zusammenfügbar i't. **(Fig. 1 - 5)**.

10. Profilstab nach Patentanspruch **1**,
**dadurch gekennzeichnet,**
dass die Kreisringsektoren **(60)** durch Umfangs-Begrenzungen **(68)** begrenzt sind, welche zwischen der jeweiligen Radial- und Umfangsrichtung verlaufen, und welche Anschläge für entsprechende Umfangs-Begrenzungen eines weiteren, gleichen Profilstabes bilden, der mit dem genannten Profilstab **(60)** zusammenfügbar ist. **(Fig. 6).**

Fig. 1

Fig. 2

Fig. 3

Fig.4

Fig. 5

Fig.6

Europäisches
Patentamt

# EUROPÄISCHER RECHERCHENBERICHT

Nummer der Anmeldung

EP 96 10 1191

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | WO-A-83 04294 (ADECO ENGINEERING)<br>* Seite 2, Zeile 12 - Seite 3, Zeile 23; Abbildungen 2A,2B *<br>--- | 1-5 | F16S3/04<br>E04B1/61 |
| X | US-A-933 665 (RAFTER)<br>* das ganze Dokument *<br>--- | 1,2,5 | |
| A | US-A-2 644 553 (CUSHMAN)<br>* Spalte 2, Zeile 18 - Spalte 3, Zeile 9; Abbildungen 1-3 *<br>--- | 1,4,6 | |
| A | NAVY TECHNICAL DISCLOSURE BULLETIN,<br>Bd. 1, Nr. 1, Mai 1976, US,<br>Seiten 15-19, XP000060023<br>CAMPBELL: "symmetrical oil containment boom connector"<br>--- | | |
| A | WO-A-89 11575 (DENT)<br>----- | | |

**RECHERCHIERTE SACHGEBIETE (Int.Cl.6)**

F16S
E04B
E04C
E02D
F16B
E04H

Der vorliegende Recherchenbericht wurde für alle Patentansprüche erstellt

| Recherchenort | Abschlußdatum der Recherche | Prüfer |
|---|---|---|
| DEN HAAG | 22.April 1996 | Vrugt, S |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.............................................................
& : Mitglied der gleichen Patentfamilie, übereinstimmendes
    Dokument

EPO FORM 1503 03.82 (P04C03)